# EUROPEAN PATENT SPECIFICATION

(11) **EP 2 336 480 B1**
(45) Date of publication and mention of the grant of the patent: **23.05.2012**
(21) Application number: 10195073.1
(22) Date of filing: 15.12.2010
(51) Int. Cl.: B60R 3/02, E06C 1/32, E06C 5/04

(54) **Ladder with two lengths, in particular for camping vehicles**
Leiter mit zwei Längsteilen, insbesondere für Campingfahrzeuge
Échelle avec deux longueurs, en particulier pour véhicules de camping

(30) Priority: 15.12.2009 IT PI20090158
(43) Date of publication of application: 22.06.2011
(73) Proprietor: ST.LA.Srl, 56025 Pontedera (PI) (IT)
(72) Inventor: Zappolini, Stefano, 56020, Montopoli V.A. (PI) (IT)
(74) Representative: Gritschneder, Martin

(56) References cited:
- FR-A- 2 235 040
- FR-A- 2 828 522

## Description

### Technical Field

The present invention concerns a ladder for camping vehicles.

### Background Art

Fixed ladders are structures made of two vertical members and a set of rungs or steps, and they could be composed of one or more lengths but they have the main feature of not being self-supporting, that is they need to be leaned against a vertical surface. This kind of rigid ladder is very widespread as it has a simple structure and little overall dimensions. In particular, due to the little dimensions they have in a plant view, rigid ladders are commonly used since ever as an accessory in camping vehicles, such as campers or caravans. In that kind of vehicles rigid ladders are usually adopted for reaching beds placed at a high position in the living room of the vehicle and the ladder is equipped with binding means for fastening it to the support surface since, without binding means, the movement of the vehicle would impede the required stability of the ladder. In this specific field the rigid ladders are designed on demand for adapting to the specific application as a function of the internal room and the height they have to reach. For instance, if they have to reach a bed placed above the driver's cabin, they usually have four or five steps with a gap of 20-25 cm, and the length of the side members is such that the binding means placed at their upper ends are able to engage an upper portion of a vertical surface of the bed structure.

Nevertheless, in order to improve the use of room inside camping vehicles, they provide places such as beds, wardrobes, cabinets, or the like, which can be vertically moved from a lower to an upper position and they can be used in both positions. I this case the above described conventional rigid ladders have limits since, as they are designed with a predefined number of steps and to be bound at a specific height, they do not allow to reach both the position of the movable piece of furniture.

In view of the above limits of the conventional rigid ladders it is felt the need of finding solutions for using a same rigid ladder with binding means for reaching places which can be moved to two different positions in height.
Document FR-A-2 828 522 discloses a ladder according to the preamble of claim 1.

### Summary of invention

It is an object of the present invention to propose a rigid ladders for camping vehicles provided with binding means for being fastened to a leaning surface which is able to be configured at two different lengths and for being fastened to the leaning surface at two different heights.

It is further object of the present invention to propose a rigid ladder for camping vehicles which can be configured for reaching two different heights and which has a very simple, reliable and cost effective structure.

The above objects are attained by a rigid ladder for camping vehicles according to claim 1.

Advantageously in a preferred embodiment of the invention the ladder has the following features.
The second length (30) has a total transversal dimension lower than the distance between the first side members (21, 22).

The rotation axis of the second length with regard to the first length is placed in correspondence of one between the upper portion and the intermediate portion of the first side members.

In the first side members, the upper portion is rounded to the intermediate portion and the intermediate portion is rounded to the lower portion.

The second side members of the second length comprise, at their lower ends, rounded or inclined portions, the rotation axis being placed in correspondence of the rounded or inclined portions.

The second side members of the second length also comprise at least one end travel member engaging with a corresponding end travel housing of the first side member apt to define an end travel point in the position of maximum length of the ladder.

The above end travel housing is a groove made in the first restraining means and the at least one travel member is a pin protruding from at least one of the second side members.

The rotation axis is located in a position such that when the second length is substantially parallel to the first length and downward directed an external surface of the first steps acts as a stop member touching against an external surface of the second side members.

Finally, the intermediate portion of the first side members is inclined with regard to the lower portion of an angle in a range from 30° to 60°.

A rigid ladder having the above features is able to be configured at two different lengths, so that it can be fastened to support walls at two different heights, and it has a very simple, stable and reliable structure with very low overall dimensions in plant. In addiction, thanks to the simplicity of the structure, the production costs are very low. The change of configuration from the minimum length to the maximum length and vice-versa is very simple and rapid. Furthermore, also from an aesthetic point of view, the rigid ladder of the present invention has a good appeal which, together it the present of the restraining means, renders it specifically suitable to be used in camping vehicles.

### Brief description of drawings

These and more characteristics of the present invention will be more easily comprehensible thanks to the following description of a preferred embodiment, given as a non limiting example, with reference to the accompanying drawings in which:
- Figure 1 shows a front view of a rigid ladder according to the present invention in a maximum length configuration;
- Figure 2 shows a side view of the rigid ladder of fig. 1;
- Figure 3 shows a back view of the rigid ladder of fig. 1 on a minimum length configuration;
- Figure 4 shows a side view similar to fig. 2 of the rigid ladder of the present invention in the configuration of fig. 3;
- Figures 5 shows in detail a portion of fig. 4 in which with dot line is shown the second length in several positions during its run from the minimum length position to the maximum length position and vice-versa.

### Description of preferred embodiments

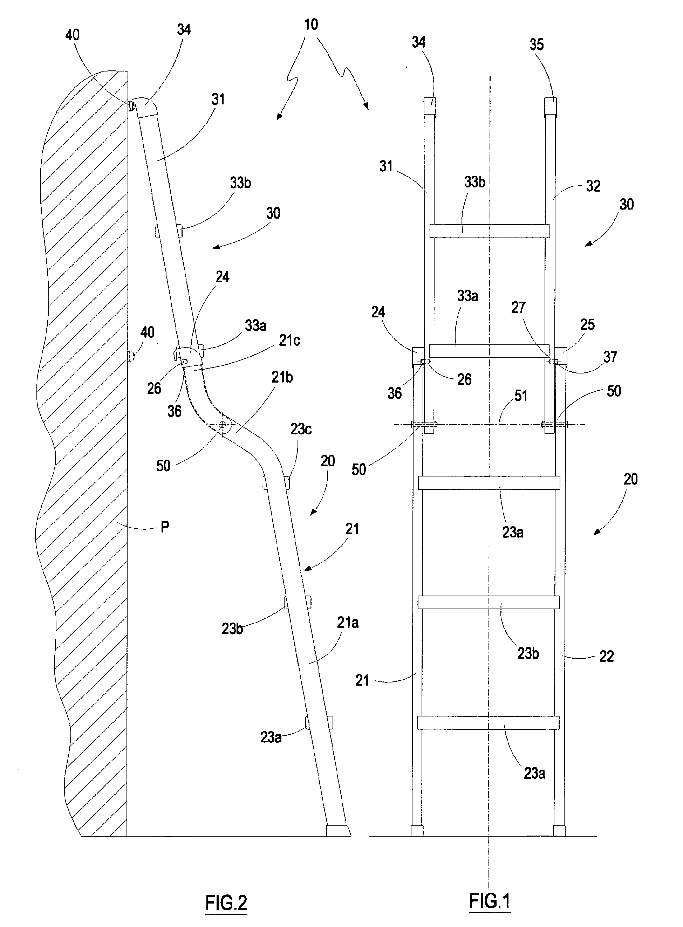

With reference to figs. 1 and 2 it is shown a rigid ladder, 10, made of a first length, 20, and a second length, 30. The first length is composed by two first side members, 21, 22, shaped so that they form a straight lower portion, 21 a, 22a, an intermediate portion, 21 b, 22b, inclined with regard to the lower portion, and an upper portion, 21c, 22c substantially parallel to the lower portion and offset from it. Between the lower portion of the first side members are comprised three steps, 23a, 23b, 23c, at same distances. At the free ends of the upper portions 21c, 22c, there are restraining means, 24, 25, for binding the ladder to the support wall P. The restraining means 24 and 25 are composed of hook shaped elements protruding from the side facing the support wall which is also opposite to the side directed towards the lower portion, said hook shaped elements being suitable to engage, for instance, with specific restraining blocks, 40, integral to the support wall P, or even to a horizontal edge of the support wall P. The second length is composed of two second side members, 31, 32, which are substantially straight for the most part of their length and they are provided at their bottom end with a round portion and a small inclined portion reproducing the shape of a high portion of the first side members 21 e 22. The second side members 31 and 32 are connected by two steps, 33a, 33b, similar to the steps 23 and at a same distance but having a lower length. The second length 30 is pivotably connected to the first length 20 thanks to two pins, 50, housed in holes provided in the intermediate portions of the first side members 21 and 22 and in the lower portion of the second side members 31 and 32, so that they form an horizontal rotation axis, 51, parallel to the axis of the steps 23 and 33. Since the second side members 31 and 32 are mounted within the first side members 21 and 22, the width of the second length is equal or lower than the distance between the first side members 21 and 22 of the first length 20. The shape of the side members 21, 22, 31 and 32 is such that, in side view, in the ladder's maximum length configuration the second side members 31 and 32 are aligned to the upper portion 21c, 22c of the first side members. A stop position for the rotation of the second length 30 with regard to the first length 20 is defined by providing two pins, 36, 37, integral to the second side members 31 and 32 and protruding from them which, in the maximum length configuration, engage corresponding grooves 26, 27, made in the restraining means 24 and 25. At the top ends of the second side members 31 and 32 there are further restraining means, 34, 35, identical to the restraining means 24 and 25 and having the same scope.

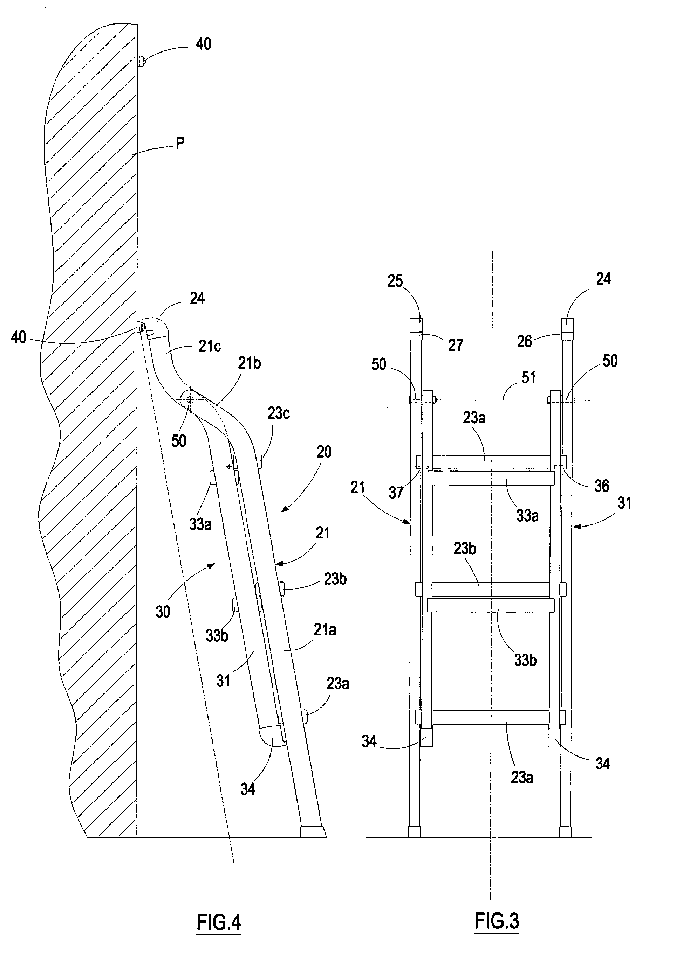

In figures 3 and 4 it is shown the ladder of figs. 1 and 2 in the minimum length configuration. In particular, fig. 3 is a back view while fig. 4 is a side view just like fig. 2. The minimum length configuration is obtained by rotating of 180° the second length about the rotation axis 51. In the minimum length configuration the second side members 31 and 32 are parallel to the lower portions 21 a, 22a of the first side members, but they are downward directed and they touch the steps 23 of the first length which are thicker than the first side members 21 and 22, so that they define a stop position of the rotation of the second length. As it clearly visible in the minimum length configuration the second length 30 is comprised in the depth (see fig. 4) length and width (see fig. 3) dimensions of the first length 20.

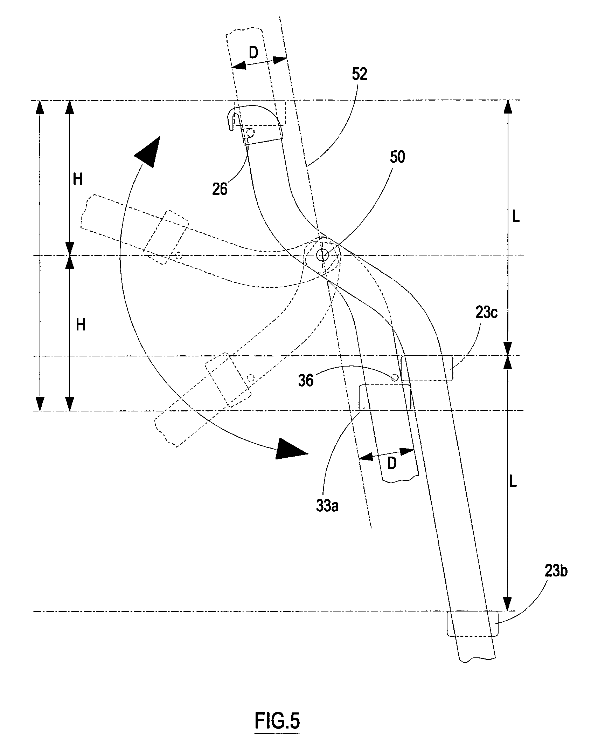

In fig. 5 it is shown a central portion of the ladder of fig. 4 in which with dot line are sketched several position assumed by the second length 30 in its run from the minimum length configuration to the maximum length configuration. Fig. 5 points out the importance of properly dimensioning and shaping the various members of the ladder, in particular the shape of the side members and the position of the rotation axis 51, in order to have ergonomics, safety of use and simplicity of the structure. In order to allow the second length to rotate of 180° the pins 50 which define the rotation axis 51 has to be placed on the axis 52, with a distance from the middle axis of the upper portion 21 c, 22, of the first side members which the same of the difference between the distance of the lower portion 21a, 22a of the first side members from the middle axis and the amount of which the steps 23 protrude from the first side members. In this way we obtain that, if in the maximum length configuration the second side members 31, 32 of the second length are aligned to the upper portions 21c, 22c, of the first side members, after a 180° rotation they are downward directed parallel to the lower portions 21 a, 22a, of the first members and the steps 23 touch the second side members 31 and 32. In the vertical direction the position of the pins 50 is defined so that, in the maximum length configuration, the lowest step, 33a, of the second length 30 is at a same distance from the top step, 23c, of the first length 20 as the mutual distance of the various steps of a same length. In addiction, in the minimum length configuration the steps 33 of the second length must be vertically offset the steps 23 of the first length. The walk surface of the step 33a has to be at a distance L from the step 23c, while the pin 50 has to be placed at a distance H from the walk surface of the step 33a, wherein the distance H is half the sum of the distance L with two times the height of a step. Once defined the position of the pins 50 with regard to the lower portion 21 a, 22a and the upper portion 21c, 22c, of the first side members, the shape of the intermediate portion can be defined do that it connect the lower portion to the upper portion passing through the position of the rotation axis 50. Obviously, the lower portion can be connected to the upper portion passing through the rotation axis 50, as above described, can be realized in many ways, but it is particularly simple to keep the section of the side members 21 and 22 constant even in the intermediate portion 21b, 22b, and inclined of about 45° with regard to the lower and upper portion by providing, for reasons concerning the safety of use and the mechanical strength, rounded connection zones. The lower portions of the second side members are shaped for being aligned to the first side members in the maximum length configuration.

It is obvious that the peculiar features of the ladder of the present invention remain safe even in different embodiments which can be provided.

A lock element for restraining the second length in the minimum length configuration could be provided, for instance by providing an element integral to the first length which is able to keep the stop pins 36, 37 engaged to the first length in the minimum length configuration.

The end point of the rotation in the maximum length configuration could be set through a different kind of stop means such as, for instance, couples of hook members suitable to engage each other, in which a first hook member is integral to the first side members placed on the internal side and a second hook member is integral to the second side members placed on the external side.

Furthermore, the second side members could be bound at the external side of the first side members and in this case the width of the first length is less than the distance between the second side members.

The restraining means for engaging the support wall could be of a different kind, with or without means for preventing fortuitous disengagement.

The number of steps of the two lengths could be different even if, it is preferable that the second length has at least one step less than first length.

These and other changes or modifications could be carried out to the rigid ladder of the present invention, still remaining within the ambit of protection defined by the following claims.

## Claims

1. Ladder (10) with two lengths for camping vehicles in which said ladder is provided with restraining means for binding it to a support wall, the ladder comprising:
- a first length (20) comprising first side members (21, 22) joined by first steps (23) and provided at one side of the top end with first restraining means (24, 25);
- a second length (30) comprising second side members (31, 32) joined by second steps (33) and provided at the top end with second restraining means (34, 35), said second side members (31, 32) comprising a straight main portion;
wherein said second length (30) is pivotably bound to said first length (20) in order to rotate about a rotation axis (51) parallel to the axis of said first (23) and second (33) steps, between a position of maximum length of said ladder (10) and a position of minimum length of said ladder (10);
the ladder being **characterized in that**
- said first side members (21, 22) comprising a straight lower portion (21a, 22a), an intermediate portion (21 b, 22b) inclined with regards to said lower portion, and an upper portion (21c, 22c) parallel to said lower portion and offset from it longitudinally and transversally towards the direction rising perpendicular to said side of the first side member where are said restraining means (24); **in that**
- in said position of maximum length of the ladder said straight portion of said second side members (31, 32) is substantially aligned, in side view, with said upper portion (21c, 22c) of said first side members (21, 22) and it is upward directed; and **in that**
- in said position of minimum length of the ladder the straight portion of said second side members (31, 32) is substantially parallel to the lower portion (21 a, 22a) of said first side members (21, 22) and it is downward directed.

2. Ladder with two lengths according to claim 1 **characterized in that** said second length (30) has a total transversal dimension lower than the distance between said first side members (21, 22).

3. Ladder (10) with two lengths for camping vehicles according to any preceding claim **characterized in that** said rotation axis (51) of said second length (30) with regards to said first length (20) is placed in correspondence of one between said upper portion (21c, 22c) and said intermediate portion (21b, 22b) of said first side members (21, 22).

4. Ladder (10) with two lengths for camping vehicles according to any preceding claim **characterized in that** said upper portion (21c, 22c) is rounded to said intermediate portion (21 b, 22b) and said intermediate portion (21 b, 22b) is rounded to said lower portion (21a, 22a).

5. Ladder (10) with two lengths for camping vehicles according to any preceding claim **characterized in that** said second side members (31, 32) comprise, at their lower ends, rounded or inclined portions, said rotation axis (51) being placed in correspondence of said rounded or inclined portions.

6. Ladder (10) with two lengths for camping vehicles according to any preceding claim **characterized in that** said second side members (31, 32) comprise at least one end travel member (36, 37) engaging with a corresponding end travel housing (26, 27) of said first side members (21, 22) apt to define an end travel point in said position of maximum length of the ladder.

7. Ladder (10) with two lengths for camping vehicles according to the previous claim **characterized in that** said end travel housing (26, 27) is a groove made in said first restraining means (24, 25) and said at least one end travel member (36, 37) is a pin protruding from at least one of said second side members (31, 32).

8. Ladder (10) with two lengths for camping vehicles according to any preceding claim **characterized in that** said rotation axis (51) is located in a position such that when said second length (30) is in substantially parallel to said first length (20) and downward directed an external surface of said first steps (23) acts as a stop member touching against an external surface of said second side members (31, 32).

9. Ladder (10) with two lengths for camping vehicles according to any preceding claim **characterized in that** said intermediate portion (21 b, 22b) is inclined with regards to said lower portion (21a, 22a) of an angle in a range from 30° to 60°.

## Patentansprüche

1. Leiter (10) mit zwei Längsteilen für Campingfahrzeuge, wobei die Leiter mit Rückhalteeinrichtungen versehen ist, um sie an einer Stützwand festzumachen, wobei die Leiter umfasst:
- ein erstes Längsteil (20), der erste Seitenelemente (21, 22), die durch erste Stufen (23) verbunden sind, umfasst und an einer Seite des oberen Endes mit ersten Rückhalteeinrichtungen (24, 25) versehen ist;
- ein zweites Längsteil (30), der zweite Seitenelemente (31, 32), die durch zweite Stufen (33) verbunden sind, umfasst und am oberen Ende mit zweiten Rückhalteeinrichtungen (34, 35) versehen ist, wobei die zweiten Seitenelemente (31, 32) einen geraden Hauptteil umfassen;
wobei das zweite Längsteil (30) mit dem ersten Längsteil (20) schwenkbar verbunden ist, um sich um eine zur Achse der ersten (23) und zweiten (33) Stufen parallele Drehachse (51) zwischen einer Stellung von maximaler Länge der Leiter (10) und einer Stellung von minimaler Länge der Leiter (10) zu drehen;
wobei die Leiter **dadurch gekennzeichnet ist, dass**
- die ersten Seitenelemente (21, 22) umfassen: einen geraden unteren Teil (21a, 22a), einen in Bezug zu dem unteren Teil geneigten Zwischenteil (21b, 22b) und einen oberen Teil (21c, 22c), der zu dem unteren Teil parallel ist und von ihm längs sowie quer nach der Richtung hin versetzt ist, die senkrecht zu der Seite des ersten Seitenelementes aufragt, wo sich die Rückhalteeinrichtungen (24) befinden; **dadurch** dass
- in der Stellung von maximaler Länge der Leiter der gerade Teil der zweiten Seitenelemente (31, 32) mit dem oberen Teil (21c, 22c) der ersten Seitenelemente (21, 22) in Seitenansicht im Wesentlichen ausgerichtet ist und er aufwärts gerichtet ist; und **dadurch** dass
- in der Stellung von minimaler Länge der Leiter der gerade Teil der zweiten Seitenelemente (31, 32) zu dem unteren Teil (21a, 22a) der ersten Seitenelemente (21, 22) im Wesentlichen parallel ist und er abwärts gerichtet ist.

2. Leiter mit zwei Längsteilen nach Anspruch 1, **dadurch gekennzeichnet, dass** das zweite Längsteil (30) eine Gesamtquerabmessung aufweist, die kleiner als der Abstand zwischen den ersten Seitenelementen (21, 22) ist.

3. Leiter (10) mit zwei Längsteilen für Campingfahrzeuge nach einem vorangehenden Anspruch, **dadurch gekennzeichnet, dass** die Drehachse (51) des zweiten Längsteils (30) in Bezug zu dem ersten Längsteil (20) in Entsprechung von einer zwischen dem oberen Teil (21c, 22c) und dem Zwischenteil (21b, 22b) der ersten Seitenelemente (21, 22) platziert ist.

4. Leiter (10) mit zwei Längsteilen für Campingfahrzeuge nach einem vorangehenden Anspruch, **dadurch gekennzeichnet, dass** der obere Teil (21c, 22c) zum Zwischenteil (21b, 22b) hin gerundet ist und der Zwischenteil (21b, 22b) zum unteren Teil (21a, 22a) hin gerundet ist.

5. Leiter (10) mit zwei Längsteilen für Campingfährzeuge nach einem vorangehenden Anspruch, **dadurch gekennzeichnet, dass** die zweiten Seitenelemente (31, 32) an ihren unteren Enden gerundete oder geneigte Teile umfassen, wobei die Drehachse (51) in Entsprechung der gerundeten oder geneigten Teile platziert ist.

6. Leiter (10) mit zwei Längsteilen für Campingfahrzeuge nach einem vorangehenden Anspruch, **dadurch gekennzeichnet, dass** die zweiten Seitenelemente (31, 32) mindestens ein Endlagenelement (36, 37) umfassen, das mit einer entsprechenden Endlageneinkerbung (26, 27) der ersten Seitenelemente (21, 22) in Eingriff tritt, die geeignet ist, einen Endlagenpunkt in der Stellung von maximaler Länge der Leiter zu begrenzen.

7. Leiter (10) mit zwei Längsteilen für Campingfahrzeuge nach dem vorherigen Anspruch, **dadurch gekennzeichnet, dass** die Endlageneinkerbung (26, 27) eine Nut ist, die in den ersten Rückhalteeinrichtungen (24, 25) gemacht ist, und das mindestens eine Endlagenelement (36, 37) ein Stift ist, der von mindestens einem von den zweiten Seitenelementen (31, 32) vorsteht.

8. Leiter (10) mit zwei Längsteilen für Campingfahrzeuge nach einem vorangehenden Anspruch, **dadurch gekennzeichnet, dass** die Drehachse (51) in einer Position angeordnet ist, so dass, wenn das zweite Längsteil (30) im Wesentlichen parallel zu dem ersten Längsteil (20) ist und abwärts gerichtet ist, eine Außenoberfläche der ersten Stufen (23) als ein Anschlagelement wirkt, das gegen eine Außenoberfläche der zweiten Seitenelemente (31, 32) anliegt.

9. Leiter (10) mit zwei Längsteilen für Campingfahrzeuge nach einem vorangehenden Anspruch, **dadurch gekennzeichnet, dass** der Zwischenteil (21b, 22b) in Bezug zu dem unteren Teil (21a, 22a) mit einem Winkel in einem Bereich von 30° bis 60° geneigt ist.

## Revendications

1. Echelle (10) de deux longueurs pour véhicules de camping, ladite échelle étant munie de moyens de restriction pour la fixer à une paroi de support, l'échelle comprenant :
- une première longueur (20) comprenant des premiers longerons (21, 22) joints par des premières marches (23) et munis d'un côté de l'extrémité supérieure de premiers moyens de restriction (24, 25) ;
- une seconde longueur (30) comprenant des seconds longerons (31, 32) joints par des secondes marches (33) et munis à l'extrémité supérieure de seconds moyens de restriction (34, 35), lesdits seconds longerons (31, 32) comprenant une partie principale droite ;
dans laquelle ladite seconde longueur (30) est fixée avec faculté de rotation à ladite première longueur (20) afin de tourner autour d'un axe de rotation (51) parallèlement à l'axe desdites premières (23) et secondes (33) marches, entre une position de longueur maximale de ladite échelle (10) et une position de longueur minimale de ladite échelle (10) ;
l'échelle étant **caractérisée en ce que**
- lesdits premiers longerons (21, 22) comprennent une partie inférieure droite (21a, 22a), une partie intermédiaire (21 b, 22b) inclinée relativement à ladite partie inférieure, et une partie supérieure (21 c, 22c) parallèle à ladite partie inférieure et décalée de celle-ci longitudinalement et transversalement vers le sens montant perpendiculairement audit côté dudit premier longeron où se trouvent ledit moyen de restriction (24) ; et **en ce que**
- à ladite position de longueur maximale de l'échelle, ladite partie droite desdits seconds longerons (31, 32) est sensiblement alignée, en vue latérale, avec ladite partie supérieure (21 c, 22c) desdits premiers longerons (21, 22) et est dirigée vers le haut ; et **en ce que**
- à ladite position de longueur minimale de l'échelle, ladite partie droite desdits seconds longerons (31, 32) est sensiblement parallèle à la partie inférieure (21a, 22a) desdits premiers longerons (21, 22) et est dirigée vers le bas.

2. Echelle de deux longueurs selon la revendication 1, **caractérisée en ce que** ladite seconde longueur (30) a une dimension transversale totale inférieure à la distance entre lesdits premiers longerons (21, 22).

3. Echelle (10) de deux longueurs pour véhicules de camping selon l'une quelconque des revendications précédentes, **caractérisée en ce que** ledit axe de rotation (51) de ladite seconde longueur (30) relativement à ladite première longueur (30) est placé en correspondance avec l'un entre ladite partie supérieure (21 c, 22c) et ladite partie intermédiaire (21b, 22b) desdits premiers longerons (21, 22).

4. Echelle (10) de deux longueurs pour véhicules de camping selon l'une quelconque des revendications précédentes, **caractérisée en ce que** ladite partie supérieure (21c, 22c) est arrondie vers ladite partie intermédiaire (21b, 22b) et ladite partie intermédiaire (21b, 22b) est arrondie vers ladite partie inférieure (21 a, 22a).

5. Echelle (10) de deux longueurs pour véhicules de camping selon l'une quelconque des revendications précédentes, **caractérisée en ce que** lesdits seconds longerons (31, 32) comprennent, à leurs extrémités inférieures, des parties arrondies ou inclinées, ledit axe de rotation (51) étant placé en correspondance avec lesdites parties arrondies ou inclinées.

6. Echelle (10) de deux longueurs pour véhicules de camping selon l'une quelconque des revendications précédentes, **caractérisée en ce que** lesdits seconds longerons (31, 32) comprennent au moins un élément mobile d'extrémité (36, 37) s'engageant avec un logement mobile d'extrémité (26, 27) correspondant desdits premiers longerons (21, 22) apte à définir un point mobile d'extrémité à ladite position de longueur maximale de l'échelle.

7. Echelle (10) de deux longueurs pour véhicules de camping selon l'une quelconque des revendications précédentes, **caractérisée en ce que** ledit logement mobile d'extrémité (26, 27) est une rainure réalisée dans lesdits premiers moyens de restriction (24, 25) et ledit au moins un élément mobile d'extrémité (36, 37) est une broche saillant depuis au moins l'un desdits seconds longerons (31, 32).

8. Echelle (10) de deux longueurs pour véhicules de camping selon l'une quelconque des revendications précédentes, **caractérisée en ce que** ledit axe de rotation (51) est situé à une position telle que lorsque ladite seconde longueur (30) est sensiblement parallèle à ladite première longueur (30) et orientée vers le bas, une surface externe desdites premières marches (23) sert d'élément de butée buttant contre une surface externe desdits seconds longerons (31, 32).

9. Echelle (10) de deux longueurs pour véhicules de camping selon l'une quelconque des revendications précédentes, **caractérisée en ce que** ladite partie intermédiaire (21 b, 22b) est inclinée par rapport à ladite partie inférieure (21 a, 22a) selon un angle de 30° à 60°.
